# FASCICULE DE BREVET EUROPEEN

(11) **EP 1 120 244 B1**
(45) Date de publication et mention de la délivrance du brevet: **01.09.2004**
(21) Numéro de dépôt: 01400090.5
(22) Date de dépôt: 12.01.2001
(51) Int. Cl.: B32B 27/34, B32B 27/30, B32B 27/32, B32B 27/28

(54) **Film multicouche thermoformable pour la protection de substrats et objets obtenus**
Wärmeformbarer Mehrschichtfilm zum Schutz von Substraten und damit hergestellte Objekte
Thermoformable multilayered film for protecting substrates and objects made therefrom

(30) Priorité: 26.01.2000 FR 0000973
(43) Date de publication de la demande: 01.08.2001
(73) Titulaire: Atofina, 92800 Puteaux (FR)
(72) Inventeur: Silagy, David, 27000 Evreux (FR); Bussi, Philippe, 27300 Bernay (FR); Teixeira Pires, José, 27310 Bourg Achard (FR); Bonnet, Anthony, 27470 Serquigny (FR)
(74) Mandataire: Neel, Henry

(56) Documents cités:
- WO-A-94/03337
- US-A- 4 563 393

## Description

### [Domaine de l'invention]

La présente invention concerne un film multicouche thermoformable pour la protection de substrats et les objets ainsi obtenus.

On utilise en particulier dans l'industrie automobile de nombreuses pièces de carrosserie en matière plastique telles que les pare-chocs, les rétroviseurs, le capot et de plus en plus toutes les autres pièces telles que les portières et les ailes. Ces pièces ont l'avantage d'être plus légères que les mêmes pièces en acier, d'être insensibles à la corrosion et d'avoir de meilleures propriétés mécaniques. Ces pièces sont produites par injection de matière fondue et/ou thermoformage de matière thermoplastique. Il existe cependant une difficulté technique à savoir qu'il est beaucoup plus difficile de les peindre que l'acier. Une solution consiste à recouvrir ces pièces d'un film coloré, ce film pouvant être mono ou multicouche. Habituellement ce film est disposé au fond d'un moule puis on y injecte la matière plastique fondue (le substrat), après refroidissement et démoulage on obtient la pièce revêtue du film coloré, c'est la technique du surmoulage. L'adhérence du film est assurée par le contact de la matière plastique fondue avec le film provoquant la fusion de la surface du film du coté de l'injection de la matière plastique fondue et donc soudure. On peut aussi coextruder le substrat et le film coloré, coucher le substrat sur le film coloré ou encore presser à chaud le substrat sur le film coloré puis éventuellement thermoformer l'ensemble.

La présente invention concerne ces films et les substrats revêtus selon cette technique.

### [L'art antérieur]

Le brevet US 5514427 propose d'utiliser la technique dite "solvent cast" pour disperser de façon uniforme les pigments, colorants et charges dans un film multicouche. La technologie solvent cast consiste tout d'abord à réaliser une composition liquide de polymère thermoplastique dans un solvant contenant les polymères proprement dit, la dispersion de pigments et les additifs répondant à un cahier des charges donné. Cette composition liquide est ensuite déposée de façon régulière sur une bande porteuse. Cette dernière est amenée dans un four de séchage dans lequel les solvants sont extraits par évaporation et dans lequel la composition est fondue pour former une couche continue. Le film continu est ensuite enroulé. La structure du film comprend en allant de l'intérieur (coté substrat qui est en polyoléfine ou acrylonitrile butadiène styrène) vers l'extérieur une couche de polyoléfine chlorée, une couche adhésive acrylique et une couche pigmentée à base de polymère fluoré et de méthacrylate d'alcoyle.

Le brevet WO 99/37479 décrit un film multicouche obtenu par la technique dite "solvent cast" et lamination qui présente respectivement de l'intérieur(coté substrat) vers l'extérieur une couche adhésive du type "pressure sensitive adhesive" (ou adhésif sensible à la pression), une couche de polymère fluoré pigmentée opaque où les charges ne présentent pas d'orientation particulière et une couche transparente à base de polymère fluoré.

Le brevet EP 949120 propose un film multicouche constitué de l'intérieur vers l'extérieur d'une couche polymère support (polyoléfine, acrylonitrile butadiène styrène, polyamide...), d'une couche méthacrylique de base, d'une couche fluorée pigmentée (sans orientation particulière) de couleur et d'une couche fluorée transparente, ce film pouvant alors être surmoulé par différents substrats, comme des polyoléfines ou des polyamides.

Le brevet US 5725712 propose un film multicouche thermoformable obtenu par lamination constitué de l'intérieur vers l'extérieur d'une couche adhésive, d'une couche de couleur pigmentée où les charges ne présentent pas d'orientation particulière et d'une couche transparente.

Le brevet US 5707697 décrit une pièce extérieure de carrosserie décorée et résistante aux intempéries. Cette pièce est constituée d'un film multi couche obtenu par la technique dite "solvent cast" puis lamination et d'un substrat. La structure du film comprend de l'intérieur vers l'extérieur une couche de polyoléfine chlorée susceptible d'adhérer sur un substrat polyoléfinique, une couche à base de polymère fluoré de couleur pigmentée où les charges ne présentent pas d'orientation particulière et une couche de polymère fluoré transparente présentant un aspect brillant.

Le brevet WO 9640480 décrit une structure multicouche qui de l'intérieur vers l'extérieur présente une couche renfort (de type ABS) revêtue par coextrusion d'un primaire d'adhésion (acrylique), puis d'une couche colorée constituée d'un copolymère à base de PVDF en mélange avec un acrylique et d'une couche transparente de surface constituée d'un mélange de PVDF homopolymère avec un acrylique.

Le brevet WO 9403337 propose un multicouche constitué de l'intérieur vers l'extérieur d'un substrat, d'une couche adhérente constituée d'un composé compatible avec le substrat, d'une couche de renfort, d'une couche colorée qui contient des pigments dans une matrice acrylique, uréthane ou vinylique et enfin une couche transparente à base de PVDF et de PMMA présentant un gradient de composition. La couche renfort peut être constituée de PBT, PET, ABS, PVC, PA, polyester, PC, polyoléfine, d'un copolymère de l'éthylène et d'un (meth)acrylate d'alkyle, d'un polymère acrylique ou d'un mélange d'au moins deux quelconques de ces polymères.

Le brevet US 5658670 décrit un film bicouche obtenu par coextrusion et pressage à chaud d'une couche de PVDF ou dérivés et d'une couche de PA, polyuréthane ou polyoléfine modifiée par une amine.

La demande de brevet JP 09 193189 A publiée le 29 juillet 1997 décrit un film comportant 4 couches qui de l'intérieur vers l'extérieur sont respectivement une couche de polypropylène, une couche de polypropylène chargé (pigments), une couche d'un copolymère éthylène - glycidyle méthacrylate et une couche de surface transparente à base de polyméthacrylate de méthyle (PMMA).

Les brevets FR 2 740 384 et FR 2 740 385 décrivent un film possédant trois ou quatre couches à base de polyamide et de polypropylène modifié chimiquement permettant de réaliser des surfaces décorées.

Le brevet US-A-4563393 décrit un film bicouche thermoformable comprenant une couche interne à base d'unités polymérisées d'un ester éthylènique d'acide carboxylique insaturé, attachée à une couche à base d'un mélange PVDF/ polyméthacrylate de méthyle ainsi qu'une méthode pour sa fabrication et ses utilisations potentielles.

### [Le problème technique]

Dans les films de l'art antérieur le point faible est l'adhérence de la couche de polymère fluoré sur les autres couches. On a maintenant trouvé des films multicouches utiles pour la protection et la décoration de substrats, ces films ont une couche extérieure en polymère fluoré, en PMMA ou leur mélange et adhèrent parfaitement sur le substrat. Le film de l'invention est aussi beaucoup plus simple à fabriquer que celui de l'art antérieur, en particulier il ne nécessite pas de solvant.

### [Brève description de l'invention]

La présente invention concerne un film multicouche thermoformable comprenant successivement :
- une couche de protection (A),
- une couche transparente (B) comprenant (en poids le total étant 100%) 0 à 100% d'un polymère fluoré (B1) et 100 à 0% d'un polymère (B2) constitué essentiellement de motifs (meth)acrylate d'alkyle,
- une couche (C) à base de polyamide à terminaisons amines,
- une couche (D) constituée d'une polyoléfine fonctionnalisée par un anhydride d'acide carboxylique insaturé,
- une couche de liaison (E) en polyoléfine.

Ce film est obtenu par coextrusion des différentes couches, la couche (A) pouvant laminée selon la technique habituelle des thermoplastiques. Ce film est utilisé ensuite pour recouvrir différents substrats par exemple en injectant le substrat à l'état fondu sur le film multicouche disposé dans le fond d'un moule d'injection, la couche (A) du film étant disposée contre la paroi du moule.

La présente invention concerne aussi des substrats revêtus de ces films.

### [Description détaillée de l'invention]

**La couche de protection (A)** est une couche provisoire permettant de protéger la couche brillante et transparente (B) pendant les étapes de manutention du film, de thermoformage et d'injection. Cette couche protectrice permet de maintenir ou de promouvoir un état de surface donné. Ainsi cette couche pourra être lisse ou rugueuse suivant l'état de surface désiré. Cette couche évite l'utilisation d'agent de démoulage susceptible de dégrader l'état de surface de (B). Cette couche présente avantageusement une épaisseur comprise entre 10 et 150 µm et préférentiellement de 50 à 100 µm. Les matériaux utilisables pour réaliser cette couche peuvent être choisis parmi (i) les polyesters saturés tels que le PET, le PBT, les copolyesters et les polyetheresters et (ii) les polyoléfines homopolymères ou copolymères tels que les polyéthylènes et les polypropylènes. A titre d'exemple on peut citer le PET vendu sous la marque MYLAR ®par la société DuPont. Cette couche peut contenir différentes charges, comme le TiO₂, la silice, le kaolin, le carbonate de calcium, des paillettes d'aluminium et leurs dérivés.

**La couche de surface transparente (B)** est formée d'un polymère ou d'un mélange de polymères permettant d'obtenir une surface transparente, brillante, résistante aux agressions de nature chimique ou extérieure ou aux UV. Cette couche présente avantageusement une épaisseur de 10 à 200 µm et de façon préférable de 70 à 140 µm.

A titre d'exemple de polymère fluoré (B1) on citera tout particulièrement
- les PVDF, homopolymères du fluorure de vinylidène (VF2) et les copolymères du fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

Parmi ces polymères fluorés (B1) on utilise avantageusement le PVDF.

Si la couche (B) contient (B1) il est recommandé d'ajouter l'autre polymère (B2) ce qui permet d'augmenter l'adhérence avec la couche (C).
Ce polymère (B2) constitué essentiellement de motifs (meth)acrylate d'alkyle peut comprendre aussi des fonctions acide, chlorure d'acide, alcool, anhydride. A titre d'exemple de polymère (B2) on peut citer les homopolymères d'un (méth)acrylate d'alkyle. Des (méth)acrylates d'alkyle sont décrits dans KIRK-OTHMER, Encyclopedia of chemical technology, 4 ème édition dans le Vol 1 pages 292-293 et dans le Vol 16 pages 475-478. On peut encore citer des copolymères d'au moins deux de ces (méth)acrylates et des copolymères d'au moins un (méth)acrylate avec au moins un monomère choisi parmi l'acrylonitrile, le butadiène, le styrène, l'isoprène pourvu que la proportion de (meth)acrylate soit d'au moins 50% en moles. (B2) est avantageusement le PMMA. Ces polymères (B2) sont soit constitués des monomères et éventuellement des comonomères cités plus haut et ne contiennent pas de modifiant choc soit ils contiennent en plus un modifiant choc acrylique. Les modifiants choc acryliques sont par exemple des copolymères statistiques ou sequencés d'au moins un monomère choisi parmi le styrène, le butadiène, l'isoprène et d'au moins un monomère choisi parmi l'acrylonitrile et les (meth)acrylate d'alkyle, ils peuvent être de type core-shell. Ces modifiants choc acryliques peuvent être mélangés avec le polymère (B2) une fois préparé ou être introduit au cours de la polymérisation de (B2) ou préparés simultanément au cours de la polymérisation de (B2). La quantité de modifiant choc acrylique peut être par exemple de 0 à 30 parties pour 100 à 70 parties de (B2) et avantageusement de 5 à 20 parties pour 95 à 20 parties de (B2). On ne sortirait pas du cadre de l'invention si (B2) était un mélange de deux ou plusieurs des polymères précédents.

La couche (B) peut comprendre (B1) ou (B2). S'agissant de la couche (B) contenant (B1) avantageusement cette couche (B) comprend 50 à 100 parties de (B1) pour 0 à 50 parties de (B2) et de préférence comprend 60 à 80 parties (en poids) de (B1) pour 40 à 20 parties de (B2). Des polymères appropriés pour (B2) sont le SUMIPEX TR® de Sumitomo et l'OROGLASS HT121® d'Atoglass et pour (B2) le KYNAR 720® d'Elf Atochem. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants. Cette couche présente une très bonne résistance aux différents fluides utilisés dans l'automobile tels que l'essence, le liquide de refroidissement, le liquide de lave glace, le liquide de freinage, l'huile moteur et le liquide de transmission hydraulique. On obtient une très bonne conservation dans le temps de l'état et de l'aspect de surface du film.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interferentiel.

**La couche (C)** est un polyamide homopolymère ou copolymère à terminaisons amines ou un mélange de polyamides, l'un au moins étant à terminaisons amines. On entend par polyamide les produits de condensation:
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6, le PA 6-6, le PA 11 et le PA 12.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12). Avantageusement le copolyamide est choisi parmi le PA 6 /12 et le PA 6 / 6-6. L'avantage de ces copolyamides est leur température de fusion inferieure à celle du PA 6.

Pour obtenir des terminaisons amines il suffit d'effectuer la synthèse en présence d'un excès de diamine ou pour les polyamides (et copolyamides) qui sont fabriqués à partir de lactame ou d'acide alpha oméga aminocarboxylique d'utiliser une diamine ou une monoamine comme limiteur de chaîne.

A titre d'exemple on peut citer (1) les mélanges de polyamides miscibles et (2) les mélanges monophasiques résultant de la transamidification de polyamide et de polyamide semi aromatique amorphe. Des mélanges avantageux sont ceux qui sont encore cristallins et transparents c'est à dire microcristallins, par exemple des mélanges comprenant en poids 70% de PA 12 et 30% de PA 12/ BMACM- I/ BMACM- T, "I" et "T" désignant respectivement les acides iso et téréphtalique. On peut encore citer le PA BMACM- 12 et le PA PACM- 12 (PACM représente le para amino dicyclohexylméthane).

On ne sortirait pas du cadre de l'invention en utilisant des mélanges de polyamides avec une polyoléfine. Avantageusement ces mélanges sont à matrice polyamide c'est à dire qu'ils contiennent (en poids) 55 à 100 parties de polyamide pour 0 à 45 parties de polyoléfine, la polyoléfine peut être fonctionnalisée ou être un mélange d'une polyoléfine fonctionnalisée et d'une polyoléfine non fonctionnalisée. A titre d'exemple on peut utiliser les polyoléfines fonctionnalisées et non fonctionnalisées décrites dans la couche (D).

Un polyamide convenant particulièrement est le PA 12 AESNO TL® de Elf Atochem, qui permet, si (B2) content des fonctions, de réaliser via une réaction chimique une liaison covalente stable dans le temps avec les fonctions anhydride, acide, chlorure d'acide ou alcool du polymère B2. L'épaisseur de cette couche est avantageusement comprise entre 5 et 200 µm et de façon préférable entre 70 et 140 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

Cette couche participe avec la couche (B) à l'aspect et à la protection du substrat.

**La couche (D)** est constituée d'une polyoléfine fonctionnalisée par un anhydride d'acide carboxylique insaturé. La présence de la fonction anhydride permet une réaction d'imidation avec les fonctions amines de la couche (C) permettant la formation d'un lien stable dans le temps. Cette polyoléfine fonctionnalisée est souvent décrite dans l'art antérieur sous le qualificatif de liant de coextrusion.

Une polyoléfine est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée de la couche (D) peut être un polymère d'alpha oléfines ayant des motifs anhydride d'acide carboxylique insaturé. À titre d'exemple, on peut citer les polyoléfines précédentes greffées ou copolymérisées par des anhydrides d'acides carboxyliques insaturés. Les procédés de greffage sont connus de l'homme de l'art. On ne sortirait pas du cadre de l'invention en utilisant des acides carboxyliques insaturés ainsi que les dérivés de ces acides et anhydrides. A titre d'exemple on peut citer l'acide acrylique, l'acide méthacrylique, l'acide maléique, l'acide fumarique, l'acide itaconique, l'acide crotonique, l'anhydride itaconique, l'anhydride nadique, l'anhydride maléique et les anhydrides maléiques substitués tel que par exemple l'anhydride diméthyl maléique. A titre d'exemples de dérivés, on peut citer les sels, les amides, les imides et les esters tels que le mono et dimaléate de sodium, l'acrylamide, le maleimide et le fumarate de diméthyle. l'acide (méth)acrylique peut être neutralisé totalement ou partiellement par des métaux tels que Zn, Ca, Li. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

Avantageusement (D) est à base de polypropylène par exemple comprenant essentiellement du polypropylène homo ou copolymère fonctionnalisé par greffage d'au moins un acide carboxylique insaturé, un anhydride d'acide carboxylique insaturé ou des dérivés de ces acides et anhydrides. Ces produits ont déjà été cités plus haut. Avantageusement, on greffe du polypropylène de MFI (abréviation de Melt Flow Index ou indice de fluidité à l'état fondu) 0,1 à 10 g/10 mm à (230° C sous 2,16 kg) par de l'anhydride maléique en présence d'initiateurs tels que des peroxydes. La quantité d'anhydride maléique effectivement greffée peut être comprise entre 0,01 et 10 % en poids du polypropylène greffé. Le polypropylène greffé peut être dilué par du polypropylène, des caoutchoucs EPR, EPDM ou des copolymères du propylène et d'une alpha oléfine. On peut aussi, selon une autre variante, effectuer un cogreffage d'un mélange de polypropylène et d'EPR ou d'EPDM, c'est-à-dire ajouter un acide carboxylique insaturé, un anhydride ou leurs dérivés dans un mélange de polypropylène et d'EPR ou d'EPDM en présence d'un initiateur.

A titre d'autres exemples de constituants de la couche (D) on peut citer les mélanges comprenant en poids :
- 0 à 50% et de préférence 10 à 40% d'au moins un polyéthylène ou un copolymère de l'éthylène,
- 50 à 100% et de préférence 60 à 90% d'au moins un polymère choisi parmi le polypropylène ou un copolymère du propylène, le poly (1-butène) homo ou copolymère, le polystyrène homo ou copolymère et de préférence le polypropylène,
- ces mélanges étant greffés par un monomère fonctionnel choisi parmi les acides carboxyliques et leurs dérivés, les chlorures d'acides, les isocyanates, les oxazolines, les époxydes, les amines ou les hydroxydes et de préférence les anhydrides d'acides dicarboxyliques insaturés.
- ces mélanges greffés étant éventuellement dilués dans au moins une polyoléfine comprenant essentiellement des motifs propylene ou dans au moins un polymère à caractère élastomérique ou dans leur mélange.

Des polymères utilisables pour cette couche (D) sont par exemple les polypropylènes greffés d'Elf Atochem et de DuPont vendus respectivement sous les marques OREVAC PPFT® et BYNEL 50E561® .

L'épaisseur de cette couche est avantageusement comprise entre 10 et 250 µm et préférentiellement entre 40 et 110 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

**La couche de liaison (E)** qui permet de réaliser le collage avec le substrat est une polyoléfine, les polyoléfines ont été définies dans la couche (D). Ces matériaux possèdent une compatibilité et une affinité suffisantes pour permettre un collage avec la couche (D) et le substrat. On utilise avantageusement le polypropylène. Des matériaux convenant parfaitement pour la réalisation de cette couche sont les polypropylènes 3050 BN1 et 3060 MN5 de la société Appryl. L'épaisseur de cette couche est avantageusement comprise entre 400 et 800 µm et de façon préférable entre 500 et 600 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

Le film de l'invention est fabriqué par coextrusion selon une technique habituelle des thermoplastiques dans laquelle on force la matière fondue des différentes couches à travers des filières plates disposées très proches les unes des autres, l'association des matières fondues forme le film multicouches qu'on refroidit par passage sur des rouleaux à température contrôlée. En ajustant les vitesses de rouleaux disposés dans le sens longitudinal et/ou de rouleaux disposés dans le sens transversal on peut provoquer un étirage dans le sens longitudinal et/ou dans le sens transversal.

Les MFI des différentes couches sont choisis aussi proche que possible, entre 1 et 20 (à 230°C, 2,16 kg), les MFI sont de façon avantageuse compris entre 4 et 7, ce choix est du ressort de l'Homme de métier de la coextrusion.

Le film multicouche de l'invention est utile pour recouvrir des substrats soit par sur surmoulage, soit par coextrusion, soit par couchage soit encore par pressage à chaud. On utilise avantageusement la technique du surmoulage. Si le moule est de forme simple l'injection du substrat à l'état fondu suffit à plaquer le film contre la paroi du moule, on utilise alors le film tel qu'on l'a obtenu. Si le moule est de forme plus compliquée, pour éviter des contraintes dans le film et pour assurer un bon contact du film avec les parois du moule il est nécessaire de preformer le film par therformage avant de le mettre dans le moule. On peut utiliser un autre moule de même forme et à l'aide d'une pièce ayant la même forme mais en positif on thermoforme le film, on peut aussi utiliser le même moule qui sert à l'injection du substrat. On peut aussi pour des conditions intermédiaires des précédentes ne pas faire de thermoformage mais mettre le film tel quel dans le moule et par de l'air comprimé du coté ou est injecté le substrat plaquer le film sur la paroi du moule. On peut aussi faire le vide de l'autre coté du film pour le plaquer contre la paroi du moule.

Si le film doit être thermoformé les produits utilisés devront présenter une gamme de température de thermoformage présentant une zone de recouvrement aussi large que possible. A titre d'exemple on cite dans le tableau-1 suivant la température de fusion (Tf), la température minimum de thermoformage (THF MIN) et la température maximum de thermoformage (THF MAX) de différents constituants des couches du film de l'invention.

**Tab 1 :**

| Gamme de température de thermoformage. | | | |
|---|---|---|---|
| PRODUIT | **Tf (°C)** | **THF MIN.** | **THF MAX.** |
| polypropylène homopolymère | 165-175 | Tf-25°C | Tf+5°C |
| polypropylène copolymère | 160-171 | Tf-20°C | Tf+30°C |
| polypropylène maléisé | 160-175 | Tf-25°C | Tf+5°C |
| PA 6 | 210-221 | Tf-25°C | Tf+5°C |
| PA 6 / 6-6 | 180-190 | Tf-25°C | Tf+20°C |
| PA 11 | 183-192 | Tf-25°C | Tf+5°C |
| PA 12 | 178-180 | Tf-25°C | Tf+5°C |
| Mélange de PA 6 et polyoléfine | 200-225 | Tf-25°C | Tf+5°C |
| PVDF homopolymère | 168-172 | Tf-25°C | Tf+5°C |
| PMMA | Tg=90-105 | Tg+20°C | Tg+60°C |
| PVDF/PMMA (60/40) | 168-172 | Tf-25°C | Tf+5°C |

Les différentes couches peuvent contenir des charges et additifs pourvu que les propriétés de transparence de la couche supérieure (B) et les couleurs et les effets de couleurs de l'ensemble de la structure ne soient pas affectés.

L'invention est particulièrement utile pour recouvrir des substrats en polypropylène.

### [Les exemples]

### Exemple 1 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 2 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm³/10 min (230°C , 5kg)) et de 40 % en masse d'OROGLAS® HT121 (PMMA (copolymère de MMA et d'acide méthacrylique) à 3,8% d'acide et de MFI 2 g/10 min (230°C , 3,8kg)) et de 0,6 % en masse de Tinuvin ® 1577 (absorbeur UV vendu par Ciba Speciality chemicals) par rapport à la masse totale de résine. Cette couche a une épaisseur de 100 µm. Cette couche est coextrudée sur la couche (C), constituée d'ULTRAMID ® B36F (PA 6 terminé amine, de MVI 5 cm³/10mn à 235°C, 2,16 kg). Cette couche a une épaisseur de 35µm. Cette couche est coextrudée sur la couche (D) qui est un Bynel® 50E561 (polypropylène modifié anhydride de MVI 5 cm³/10mn à 190°C sous 2,16 kg). Cette couche a une épaisseur de 75 µm. Cette couche est coextrudée sur la couche (E) constituée d'un mélange de 94% en masse de polypropylène APPRYL 3050 BN1 (polypropylène homopolymère de MVI 5 cm³/10min (190°C 2,16kg)) et de 6 % en masse de master batch vert SANYLENE ® AU VERDE A13 GR de la société CLARIANT. Cette couche a une épaisseur de 550 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 2 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 3 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm³/10 min (230°C , 5kg)) et de 40 % en masse d'OROGLAS® HT121 (PMMA (copolymère de MMA et d'acide méthacrylique) à 3,8% d'acide et de MFI 2 g/10 min (230°C, 3,8kg)) et de 0,6 % en masse de Tinuvin ® 1577 (absorbeur UV vendu par Ciba Speciality chemicals) par rapport à la masse totale de résine. Cette couche a une épaisseur de 100 µm. Cette couche est coextrudée sur la couche (C), constituée d'ULTRAMID ® B36F (PA 6 terminé amine de MVI 5 cm³/10min à 235°C, 2,16 kg). Cette couche a une épaisseur de 35µm. Cette couche est coextrudée sur la couche (D) qui est un OREVAC PP-FT (polypropylène greffé par l'anhydride maleique de MFI 4 g/10min (190°C 2,16kg)). Cette couche a une épaisseur de 75 µm. Cette couche est coextrudée sur la couche (E) constituée d'un mélange de 94% en masse de polypropylène APPRYL 3050 BN1 (polypropylène homopolymère de MVI 5 cm³/10min (190°C 2,16kg)) et de 6 % en masse de master batch vert SANYLENE ® AU VERDE A13 GR de la société CLARIANT. Cette couche a une épaisseur de 550 µm.
5 La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 3 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 4 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 80% en masse de Kynar® 720 (PVDF homopolymère de MVI (Melt Volume Index ou indice de fluidité en volume à l'état fondu) 10 cm³/10 min (230°C, 5kg)) et de 20 % en masse d'OROGLAS® HT121 (PMMA (copolymère de MMA et d'acide méthacrylique) à 3,8% d'acide et de MFI 2 g/10 min (230°C, 3,8kg)) et de 0,6 % en masse de Tinuvin ® 234 (absorbeur UV vendu par Ciba Speciality chemicals) par rapport à la masse totale de résine. Cette couche a une épaisseur de 100 µm. Cette couche est coextrudée sur la couche (C), constituée d'un RILSAN® AESNO TL (PA12 terminé amine de MVI 2,5 (235°C 2,16 kg)) de la société ELF ATOCHEM. Cette couche a une épaisseur de 35 µm. Cette couche est coextrudée sur la couche (D) qui est un Bynel® 50E561 (polypropylène modifié anhydride d'indice de fluidité 5 g/10 min à 190°C sous 2,16 kg). Cette couche a une épaisseur de 75 µm. Cette couche est coextrudée sur la couche (E) constituée d'un mélange de 94% en masse de polypropylène APPRYL 3060 5 MN5 (polypropylène bloc copolymère de MVI 6,5 cm³/10min (190°C 2,16kg)) et de 6 % en masse de master batch vert SANYLENE ® AU VERDE A13 GR de la société CLARIANT. Cette couche a une épaisseur de 550 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 4 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 5 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 80% en masse de Kynar® 720 (PVDF homopolymère de MVI (Melt Volume Index ou indice de fluidité en volume à l'état fondu) 10 cm³/10 min (230°C , 5kg)) et de 20 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un ORGALLOY ® A (mélange de 65 % de PA-6 terminé amine de Melt index (MFI) 15-17 g/10 min (235°C 2,16 kg), 27 % de PEBD de Melt index 1g/10min (190° C) et 8 % d'un copolymère éthylène acrylate de butyl-anhydride maléique à 5,5 % d'acrylate et 3,6 % d'anhydride, de Melt index 5 g/10 min). Cette couche a une épaisseur de 25 µm. Cette couche est coextrudée sur la couche (D) qui est un OREVAC ® PP-FT polypropylène greffé par l'anhydride maleique de MFI 4 g/10min (190°C 2,16kg)
Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 5 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 6 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 80% en masse de Kynar® 720 (PVDF homopolymère de MVI (Melt Volume Index ou indice de fluidité en volume à l'état fondu) 10 cm³/10 min (230°C , 5kg)) et de 20 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un ULTRAMID ® C35F (PA 6/6-6 terminé amine de MVI 7 cm³/10min (235°C, 2,16 kg)). Cette couche a une épaisseur de 25µm. Cette couche est coextrudée sur la couche (D) qui est un OREVAC ® PP-FT (polypropylène greffé par l'anhydride maleique de MFI 4 g/10min (190°C 2,16kg)). Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 6 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 7:**

| Description des extrudeuses | | |
|---|---|---|
| | Diamètre de vis en mm | Longueur/ Diamètre |
| Extrudeuse O | 90 | 32 |
| Extrudeuse | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm³/10 min (230°C, 5kg)) et de 40 % en masse d'OROGLAS® HT121 (PMMA (copolymère de MMA et d'acide méthacrylique) à 3,8% d'acide et de MFI 2 g/10 min (230°C, 3,8kg)). Cette couche a une épaisseur de 25 µm. Cette couche est coextrudée sur la couche (C), constituée d'un RILSAN ® AESNO TL (PA12 terminé amine de MVI 2,5 (235°C 2,16kg)) de la société ELF ATOCHEM. Cette couche a une épaisseur de 25µm. Cette couche est coextrudée sur la couche (D) qui est un OREVAC ® PP-FT polypropylène greffé par l'anhydride maleique de MFI 4 g/10min (190°C 2,16kg). Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 7 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 8 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 80% en masse de Kynar® 720 (PVDF homopolymère de MVI (Melt Volume Index ou indice de fluidité en volume à l'état fondu) 10 cm³/10 min (230°C, 5kg)) et de 20 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un ULTRAMID B36 F (PA 6 terminé amine de MVI 5 cm³/10min à 235°C, 2,16 kg). Cette couche a une épaisseur de 25µm. Cette couche est coextrudée sur la couche (D) qui est un OREVAC ® PP-FT polypropylène greffé par l'anhydride maleique de MFI 4 g/10min (190°C 2,16kg)
Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 8 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 9 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 80% en masse de Kynar® 720 (PVDF homopolymère de MVI (Melt Volume Index ou indice de fluidité en volume à l'état fondu) 10 cm³/10 min (230°C, 5kg)) et de 20 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un RILSAN ® AESNO TL (PA12 terminé amine de MVI 2,5 (235°C 2,16 kg)) de la société ELF ATOCHEM. Cette couche a une épaisseur de 25µm. Cette couche est coextrudée sur la couche (D) qui est un OREVAC ® PP-FT polypropylène greffé par l'anhydride maleique de MFI 4 g/10min (190°C 2,16kg)
Cette couche a une épaisseur de 75 µm. Cette couche est coextrudée sur la couche (E) constituée d'un mélange de 97 % en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 9 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 10 :**

| description des extrudeuses. | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm³/10 min (230°C , 5kg)) et de 40 % en masse d'OROGLAS® HT121 (PMMA (copolymère de MMA et d'acide méthacrylique) à 3,8% d'acide et de MFI 2 g/10 min (230°C, 3,8kg)). Cette couche a une épaisseur de 25 µm. Cette couche est coextrudée sur la couche (C), constituée d'un ULTRAMID ® C35F (PA 6/6-6 terminé amine de MVI 7 cm³/10min (235°C, 2,16 kg)). Cette couche a une épaisseur de 25µm. Cette couche est coextrudée sur la couche (D) qui est un OREVAC ® PP-FT (polypropylène greffé par l'anhydride maleique de MFI 4 g/10min (190°C 2,16kg)). Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm³/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 10 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 11 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm³/10 min (230°C, 5kg)) et de 40 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un ORGALLOY ® A (mélange de 65 % de PA-6 terminé amine de Melt index (MFI) 15-17 g/10min (235°C 2,16 kg), 27 % de PEBD de Melt index 1 g/10mn (190° C) et 8 % d'un copolymère éthylène acrylate de butyl-anhydride maléique à 5,5 % d'acrylate et 3,6 % d'anhydride, de Melt index 5). Cette couche a une épaisseur de 25 µm. Cette couche est coextrudée sur la couche (D) qui est un OREVAC ® PP-FT polypropylène greffé par l'anhydride maleique de MFI 4 (190°C 2,16kg)
Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm3/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

### Exemple 11 :

Nous avons réalisé des films selon l'invention sur une machine ER-WE-PA® équipée de 4 extrudeuses dénommées respectivement O, I, A et B dont les caractéristiques sont données dans le tableau 2.

**Tab. 12 :**

| Description des extrudeuses | | |
|---|---|---|
| | Diamètre de vis en mm | Longueur/ Diamètre |
| Extrudeuse O | 90 | 32 |
| Extrudeuse I | 60 | 30 |
| Extrudeuse A | 50 | 24 |
| Extrudeuse B | 38 | 24 |

Un bloc de répartition des couches à lamelles a été utilisé pour réaliser la coextrusion ainsi qu'une filière porte manteau de largeur 950 mm. Le calandrage du film a été effectué sur une calandre horizontale constituée de trois rouleaux thermorégulés de façon indépendante. Dans tous les cas les films ont été réalisés à une vitesse de 5 m/minute, en utilisant des températures de rouleau de 30°C pour le rouleau le plus proche de la filière, de 40°C pour le rouleau intermédiaire et de 20°C pour le plus éloigné.
La couche (B) est constituée d'un mélange de 60% en masse de Kynar® 720 (PVDF homopolymère de MVI (Melt Volume Index ou indice de fluidité en volume à l'état fondu) 10 cm3/10 min (230°C, 5kg)) et de 40 % en masse d'OROGLAS® HT121 (PMMA (copolymère de MMA et d'acide méthacrylique) à 3,8% d'acide et de MFI 2 g/10 min (230°C , 3,8kg)). Cette couche a une épaisseur de 25 µm. Cette couche est coextrudée sur la couche (C), constituée d'un ULTRAMID B36 F (PA 6 terminé amine de MVI 5 cm³/10min à 235°C, 2,16 kg). Cette couche a une épaisseur de 25µm. Cette couche est coextrudée sur la couche (D) qui est un OREVAC ® PP-FT polypropylène greffé par l'anhydride maleique de MFI 4 cm³/10min (190°C 2,16kg)
Cette couche a une épaisseur de 75 µm. Cette couche est coextrudée sur la couche (E) constituée d'un mélange de 97% en masse de polypropylène APPRYL 3060 MN5 (polypropylène bloc copolymère de MVI 6,5 cm3/10min (190°C 2,16kg)) et de 3 % en masse de master batch vert SANYLENE ® AU VERDE A13 GR de la société CLARIANT. Cette couche a une épaisseur de 450 µm.
La couche (B) est extrudée avec un profil de température compris entre 180 et 260°C. La couche (C) est extrudée avec un profil de température compris entre 200 et 250°C. La couche (D) est extrudée avec un profil de température entre 180°C et 230°C. La couche (E) est extrudée avec un profil de température entre 200°C à 230°C. La température de la filière et du système de répartition est de 265°C. Cette structure est ensuite thermoformée à 190°c et placée dans un moule d'injection pour surmoulage par du polypropylène APPRYL ® 3131 MU7 de la société APPRYL.

## Revendications

1. Film multicouche thermoformable comprenant successivement :
• une couche de protection (A),
• une couche transparente (B) comprenant (en poids le total étant 100%) 0 à 100% d'un polymère fluoré (B1) et 100 à 0% d'un polymère (B2) constitué essentiellement de motifs (meth)acrylate d'alkyle,
• une couche (C) à base de polyamide à terminaisons amines,
• une couche (D) constituée d'une polyoléfine fonctionnalisée par un anhydride d'acide carboxylique insaturé,
• une couche de liaison (E) en polyoléfine.

2. Film selon la revendication 1 dans lequel les matériaux de la couche (A) peuvent être choisis parmi (i) les polyesters saturés tels que le PET, le PBT, les copolyesters et les polyetheresters et (ii) les polyoléfines homopolymères ou copolymères tels que les polyéthylènes et les polypropylènes.

3. Film selon l'une quelconque des revendications précédentes dans lequel le polymère fluoré (B1) est le PVDF.

4. Film selon l'une quelconque des revendications précédentes dans lequel le polymère (B2) est le PMMA.

5. Film selon l'une quelconque des revendications précédentes dans lequel le polyamide de la couche (C) est choisi parmi le PA 6, le PA 12 et le PA 6 /6-6 ces polyamides étant à terminaisons amines.

6. Film selon l'une quelconque des revendications précédentes dans lequel la polyoléfine fonctionnalisée de la couche (D) est du polypropylène greffé éventuellement dilué par du polypropylène, des caoutchoucs EPR, EPDM ou des copolymères du propylène et d'une alpha oléfine.

7. Film selon l'une quelconque des revendications 1 à 5 dans lequel la polyoléfine fonctionnalisée de la couche (D) résulte d'un cogreffage d'un mélange de polypropylène et d'EPR ou d'EPDM.

8. Film selon l'une quelconque des revendications 1 à 5 dans lequel la polyoléfine fonctionnalisée de la couche (D) est un mélange comprenant en poids :
- 0 à 50% et de préférence 10 à 40% d'au moins un polyéthylène ou un copolymère de l'éthylène,
- 50 à 100% et de préférence 60 à 90% d'au moins un polymère choisi parmi le polypropylène ou un copolymère du propylène, le poly (1-butène) homo ou copolymère, le polystyrène homo ou copolymère et de préférence le polypropylène,
- ce mélange étant greffé par un anhydride d'acide carboxylique insaturé,
- ce mélange greffé étant éventuellement dilué dans au moins une polyoléfine comprenant essentiellement des motifs propylène ou dans au moins un polymère à caractère élastomérique ou dans leur mélange.

9. Film selon l'une quelconque des revendications précédentes dans lequel la polyoléfine de la couche (E) est du polypropylène.

10. Substrat revêtu d'un film selon l'une quelconque des revendications précédentes dans lequel la couche (E) du film est contre le substrat.

11. Substrat selon la revendication 10 constitué de polypropylène.

## Patentansprüche

1. Wärmeformbarer Mehrschichtfilm, der nacheinander Folgendes umfasst:
- eine Schutzschicht (A),
- eine transparente Schicht (B), die (in Gewichtsprozent, wobei der Gesamtwert bei 100 % liegt) 0 bis 100 % eines fluorierten Polymers (B1) und 100 bis 0 % eines Polymers (B2), das im Wesentlichen aus Alkyl(meth)acrylat-Motiven besteht,
- eine Schicht (C) auf Polyamidbasis mit Amin-Endungen,
- eine Schicht (D), die aus einem Polyolefin besteht, das durch ein ungesättigtes Karbonsäureanhydrid funktionalisiert ist,
- eine Verbindungsschicht (E) aus Polyolefin.

2. Film nach Anspruch 1, wobei die Stoffe der Schicht (A) aus (i) gesättigten Polyestern wie PET, PBT, Copolyestern und Polyetherestern und (ii) homopolymeren oder copolymeren Polyolefinen wie Polyethylenen und Polypropylenen ausgewählt werden können.

3. Film nach einem der vorhergehenden Ansprüche, wobei das fluorierte Polymer (B1) PVDF ist.

4. Film nach einem der vorhergehenden Ansprüche, wobei das Polymeer (B2) PMMA ist.

5. Film nach einem der vorhergehenden Ansprüche, wobei das Polyamid der Schicht (C) aus PA 6, PA 12 und PA 6/6-6 ausgewählt wird, wobei diese Polyamide Amin-Endungen aufweisen.

6. Film nach einem der vorhergehenden Ansprüche, wobei es sich beim funktionalisierten Polyolefin der Schicht (D) um aufgepropftes Polypropylen handelt, das eventuell mit Polypropylen, EPR-Kautschuk, EPDM-Kautschuk oder Propylencopolymeren und einem Alphaolefin verdünnt ist.

7. Film nach einem der Ansprüche 1 bis 5, wobei das funktionalisierte Polyolefin der Schicht (D) aus einer Co-Propfung eines Gemischs aus Polypropylen und EPR oder EPDM resultiert.

8. Film nach einem der Ansprüche 1 bis 5, wobei das funktionalisierte Polyolefin der Schicht (D) ein Gemisch ist, das in Gewichtsprozent umfasst:
- 0 bis 50 % und vorzugsweise 10 bis 40 % von mindestens einem Polyethylen oder einem Ethylencopolymer,
- 50 bis 100 % und vorzugsweise 60 bis 90 % von mindestens einem Polymer, das aus Polypropylen oder einem Propylencopolymer, Poly(1-buten)homopolymer oder -copolymer, Polystyrolmonopolymer oder -copolymer und vorzugsweise Polypropylen ausgewählt wird,
- wobei das Gemisch durch ein ungesättigtes Karbonsäureanhydrid aufgepropft wird,
- wobei das aufgepropfte Gemisch eventuell in mindestens einem Polyolefin, welches im Wesentlichen Propylenmotive umfasst, oder in mindestens einem Polymer mit elastomerer Eigenschaft oder in einer Mischung aus den beiden verdünnt wird.

9. Film nach einem der vorhergehenden Ansprüche, wobei das Polyolefin der Schicht (E) Polypropylen ist.

10. Substrat, das mit einem Film nach einem der vorhergehenden Ansprüche überzogen ist, wobei die Schicht (E) des Films am Substrat anliegt.

11. Substrat nach Anspruch 10, das aus Polypropylen besteht.

## Claims

1. Thermoformable multilayer film comprising in succession:
• a protective layer (A);
• a transparent layer (B) comprising (by weight, the total being 100%) 0 to 100% of a fluoropolymer (B1) and 100 to 0% of a polymer (B2) essentially consisting of alkyl (meth)acrylate units;
• a layer (C) based on a polyamide with amine terminal groups;
• a layer (D) consisting of a polyolefin functionalized by an unsaturated carboxylic acid anhydride;
• a bonding layer (E) made of a polyolefin.

2. Film according to Claim 1, in which the materials of the layer (A) may be chosen from (i) saturated polyesters, such as PET and PBT, copolyesters and polyetheresters and (ii) polyolefin homopolymers or copolymers, such as polyethylenes and polypropylenes.

3. Film according to either of the preceding claims, in which the fluoropolymer (B1) is PVDF.

4. Film according to any one of the preceding claims, in which the polymer (B2) is PMMA.

5. Film according to any one of the preceding claims, in which the polyamide of the layer (C) is chosen from PA-6, PA-12, PA-6/6,6, these copolyamides having amine terminal groups.

6. Film according to any one of the preceding claims, in which the functionalized polyolefin of the layer (D) is grafted polypropylene optionally diluted with polypropylene, EPR or EPDM rubbers or propylene/α-olefin copolymers.

7. Film according to any one of Claims 1 to 5, in which the functionalized polyolefin of the layer (D) results from cografting of a blend of a polypropylene/EPR or EPDM blend.

8. Film according to any one of Claims 1 to 5, in which the functionalized polyolefin of the layer (D) is a blend comprising, by weight:
- 0 to 50% and preferably 10 to 40% of at least one polyethylene or an ethylene copolymer;
- 50 to 100% and preferably 60 to 90% of at least one polymer chosen from polypropylene or a propylene copolymer, poly(1-butene) homopolymer or copolymer and polystyrene homopolymer or copolymer, and preferably polypropylene;
- this blend being grafted by an unsaturated carboxylic acid anhydride;
- this grafted blend optionally being diluted in at least one polyolefin essentially comprising propylene units or in at least one polymer having an elastomeric character, or in a blend thereof.

9. Film according to any one of the preceding claims, in which the polyolefin of the layer (E) is polypropylene.

10. Substrate coated with a film according to any one of the preceding claims, in which the layer (E) of the film is against the substrate.

11. Substrate according to Claim 10, consisting of polypropylene.
